# EUROPEAN PATENT APPLICATION

(11) **EP 4 729 466 A1**
(43) Date of publication of application: **22.04.2026**
(21) Application number: 25209868.6
(22) Date of filing: 20.10.2025
(51) Int. Cl.: B66F 11/04

(54) **AERIAL WORK PLATFORM**

(30) Priority: 21.10.2024 KR 20240143929
(71) Applicant: Korea Atomic Energy Research Institute, Daejeon 34057 (KR)
(72) Inventor: SHIN, Hocheol, 34057 Daejeon (KR); RYU, Dong Seok, Daejeon Daejeon (KR); LEE, Won Seo, 34057 Daejeon (KR)
(74) Representative: BCKIP Part mbB

(57) **Abstract**

An aerial work platform (40) includes: a work main body unit (100) providing a working space for a worker; a plurality of multi-stage linear operating units (200) configured to extend to raise and lower the work main body unit (100) to a predetermined height; and a controller (300) for controlling the operation of the plurality of multi-stage linear operating units. The plurality of multi-stage linear operating units are arranged such that a spacing therebetween increases as it goes downward. When the plurality of multi-stage linear operating units are extended, the spacing between lower ends of the plurality of multi-stage linear operating units becomes wider.

## Description

### TECHNICAL FIELD

The present disclosure relates to an aerial work platform and an aerial work robot including the same.

### BACKGROUND

In general, aerial work platforms are important equipment used in various industrial sites where work needs to be performed at elevated locations. Typical examples include construction sites, warehouse management, facility maintenance, and the installation of electrical and communication facilities. In such work environments, aerial work platforms play a crucial role in ensuring the accessibility and safety of workers.

The aerial work platforms are mainly designed to be able to ascend and descend vertically using mechanisms such as hydraulic or screw systems. They are made in the form of platforms to enable workers to perform tasks safely and are designed to be movable by being mounted on wheels, tracks, or vehicles.

Meanwhile, among aerial work platforms, the most commonly used type is the hydraulic type, which lifts the platform using a hydraulic cylinder. The hydraulic type can support heavy loads and operate stably, but has maintenance-related issues such as oil leakage and damage to hydraulic hoses.

Furthermore, the screw-type aerial work platform, which lifts the platform using a screw jack, has a simple structure and allows for precise control at high altitudes. However, it operates slowly, is relatively heavy, and is prone to wear, making it difficult to use and handle.

Furthermore, conventional aerial work platforms may be shaky or unstable on uneven ground or in windy environments, and wheeled mobile aerial work platforms face challenges in maintaining stability on slopes or uneven terrain.

In addition, telescopic masts are widely used in industrial fields for applications such as transmitting and receiving antennas, observation cameras, lighting equipment, and aerial work platforms, where a short length is required for storage and a long length is required during operation. Conventional pneumatic or hydraulic telescopic masts are expensive, heavy, and prone to frequent failures in the seal packing areas. Furthermore, telescopic masts that use electric motors and internal tendon structures tend to have complex internal mechanisms. Since the internal links extend simultaneously, a large amount of driving force is required for extension. Additionally, the thrust generated is limited by the allowable tension of the tendons, which can withstand less force than rigid links. There are also motorized multi-stage linear actuators that form screws on the outer surfaces of the links, enabling precise and powerful extension functions. However, these too are costly and heavy.

On the other hand, vehicle-mounted automatic antennas represent a simpler and more cost-effective type of telescopic mast. These typically use steel wires or flexible racks that can be wound for storage as key components for driving antenna extension and retraction. However, due to the inherent flexibility of steel wires or flexible racks, they may bend inside the cylinder, compromising linearity. This leads to challenges in accurate position control and reduced thrust performance.

### SUMMARY

In view of the above background, the present disclosure provides an aerial work platform capable of simplifying the overall structure to reduce the total weight, and an aerial work robot including the same.

Further, the present disclosure provides an aerial work platform in which the ground-supporting area increases as the height increases, and an aerial work robot including the same.

In addition, the present disclosure provides an aerial work platform capable of maintaining stability on uneven ground through a plurality of height-adjustable support legs, and an aerial work robot including the same.

In addition, the present disclosure provides an aerial work platform and an aerial work robot including the same, which utilizes a block-type chain to enable a simpler structure, easier detection of lifting position, and improved thrust performance.

In accordance with one aspect of the present disclosure, there is provided an aerial work platform including: a work main body unit providing a working space for a worker; a plurality of multi-stage linear operating units configured to extend to raise and lower the work main body unit to a predetermined height; and a controller for controlling the operation of the plurality of multi-stage linear operating units, wherein the plurality of multi-stage linear operating units are arranged such that a spacing therebetween increases as it goes downward, and wherein when the plurality of multi-stage linear operating units are extended, the spacing between lower ends of the plurality of multi-stage linear operating units becomes wider.

In accordance with another aspect of the present disclosure, there is provided an aerial work robot including: a robot arm; a horizontal rail along which the robot arm is movable in one direction; and an aerial work platform on which the horizontal rail is mounted, wherein the aerial work platform includes: a work main body unit providing a space for a worker to work; a plurality of multi-stage linear operating units configured to extend to raise and lower the work main body unit to a predetermined height; and a controller for controlling the operation of the plurality of multi-stage linear operating units, and wherein the plurality of multi-stage linear operating units are arranged such that a spacing therebetween increases as it goes downward.

According to the embodiments of the present disclosure, by simplifying the overall structure, the total weight can be reduced, thereby facilitating use and handling.

Further, according to the embodiments of the present disclosure, the ground-supporting area increases as the height increases, which ensures safety even at elevated working positions and prevents tipping over.

In addition, according to the embodiments of the present disclosure, stability can be maintained even on uneven ground through the plurality of height-adjustable support legs, thereby enabling aerial work to be performed on various types of terrain.

Furthermore, according to the embodiments of the present disclosure, an aerial work robot can be provided with enhanced thrust, strong fixation force, and high resistance to vertical and bending loads.

In addition, according to the embodiments of the present disclosure, an aerial work robot can be provided that is remotely controllable and applicable to various environments requiring a large extension length.

### BRIEF DESCRIPTION OF THE DRAWINGS

FIG. 1 is a perspective view illustrating an aerial work robot according to one embodiment of the present disclosure.
FIG. 2 is a front operational view illustrating the operation of the aerial work robot of FIG. 1. FIG. 3 is a front operational view illustrating the operation of the aerial work robot of FIG. 1.
FIG. 4 is a perspective view illustrating an aerial work platform according to one embodiment of the present disclosure.
FIG. 5 is a front view illustrating the aerial work platform of FIG. 4.
FIG. 6 is an exploded perspective view illustrating the aerial work platform of FIG. 4. FIG. 7 is an operational perspective view illustrating the aerial work platform of FIG. 4 which is rising.
FIG. 8 is an exploded perspective view illustrating a work main body of the aerial work platform of FIG. 4.
FIG. 9 is a front view showing the counterbalance provided in the aerial work robot. FIG. 10 is a perspective view showing an aerial work platform according to another embodiment of present disclosure.
FIG. 11 is a perspective view illustrating a multi-stage linear operating unit of the aerial work platform of FIG. 4.
FIG. 12 is a cross-sectional view illustrating the interior of the multi-stage linear operating unit of FIG. 11.
FIG. 13 is a cross-sectional view showing the multi-stage linear operating unit of FIG. 11 in an extended state.
FIG. 14 is a schematic diagram showing the inside of a operation main body of the multi-stage linear operating unit.
FIG. 15 is a schematic diagram showing the internal structure of the operation main body and the connection between a block chain and a telescopic leg.
FIG. 16 is an enlarged schematic diagram showing the coupling between the telescopic leg and a fixing rod illustrated in FIG. 15.
FIG. 17 is a schematic diagram showing the block chain according to one embodiment of the present disclosure.
FIG. 18 is a schematic diagram showing the telescopic leg and the block chain according to one embodiment of the present disclosure.
FIG. 19 is a schematic diagram showing a guide groove of the block chain according to one embodiment of the present disclosure.
FIG. 20 is a schematic diagram showing the inside of the operation main body according to another embodiment of the present disclosure.

### DETAILED DESCRIPTION

A preferred embodiment of the present disclosure for implementing the spirit of the present disclosure will be described in more detail with reference to the accompanying drawings.

However, in describing the present disclosure, detailed descriptions of known configurations or functions may be omitted to clarify the present disclosure.

When an element is referred to as being 'connected' to, 'supported' by, or 'accessed' by another element, it should be understood that the element may be directly connected to, supported by, or accessed by the other element, but that other elements may exist in the middle.

The terms used in the present disclosure are only used for describing specific embodiments, and are not intended to limit the present disclosure. Singular expressions include plural expressions unless the context clearly indicates otherwise.

Further, in the present disclosure, it is to be noted that expressions, such as the upper side, the lower side, and the side surface are described based on the illustration of drawings, but may be modified if directions of corresponding objects are changed. For the same reasons, some components are exaggerated, omitted, or schematically illustrated in the accompanying drawings, and the size of each component does not fully reflect the actual size.

Further, terms including ordinal numbers, such as first and second, may be used for describing various elements, but the corresponding elements are not limited by these terms. These terms are only used for the purpose of distinguishing one element from another element.

In the present specification, it is to be understood that the terms such as "including" are intended to indicate the existence of the certain features, areas, integers, steps, actions, elements and/or combinations thereof disclosed in the specification, and are not intended to preclude the possibility that one or more other certain features, areas, integers, steps, actions, elements and/or combinations thereof may exist or may be added.

Hereinafter, with reference to the drawings, the specific configuration of an aerial work platform and an aerial work robot including the platform according to one embodiment of the present disclosure will be described.

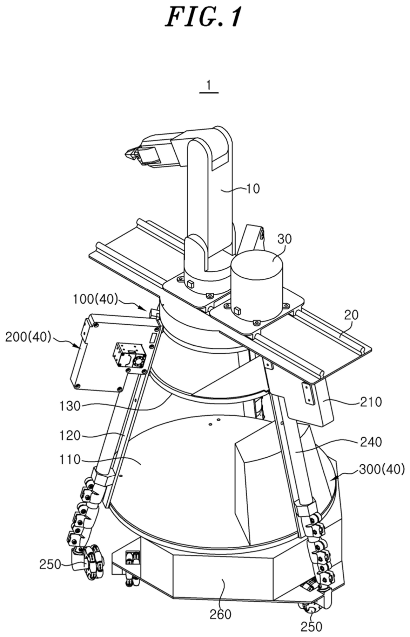

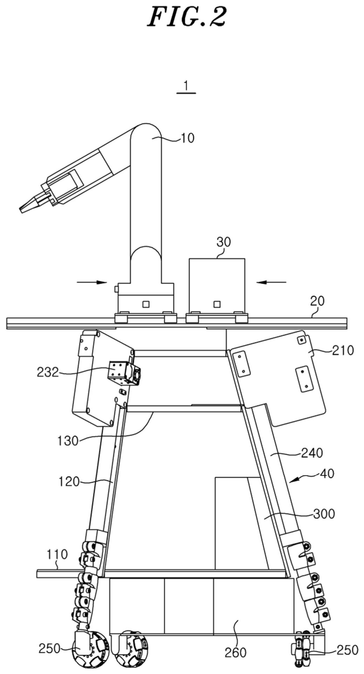

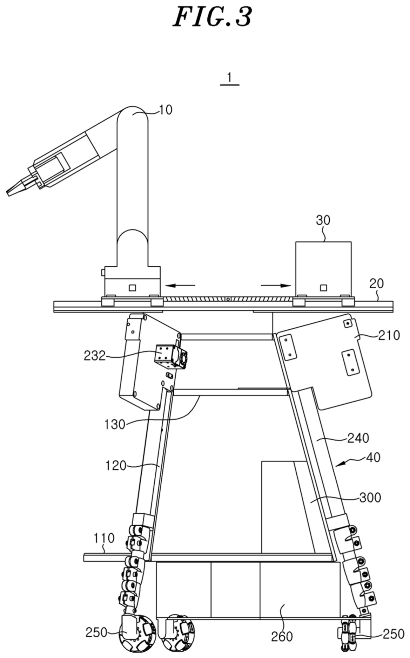

Referring to FIGS. 1 to 3, an aerial work robot 1 according to one embodiment of the present disclosure is a robot that performs work at a predetermined height. The aerial work robot 1 can move up and down to perform work at a specific height. The aerial work robot 1 can automatically perform work through a program. The aerial work robot 1 includes a robot arm 10, a horizontal rail 20, a counter mass 30, and an aerial work platform 40.

The robot arm 10 is a mechanically constructed device that operates like a human arm. The robot arm 10 may include joint portions (not shown) that fold at multiple points, links (not shown) connected to the joint portions, and an end effector (not shown) provided at the end of the links to suit the work being performed. For example, the end effector (not shown) may be provided as a tool necessary for the work, such as a gripper, a welder, a drill, or a camera. The robot arm 10 may be mounted on the horizontal rail 20 to slide along it, and may be connected to a screw rod (not shown) to receive driving force. The robot arm 10 may be provided with motors and actuators so that it can operate in three dimensions. The robot arm 10 may further be provided with a position sensor, a force sensor, and a vision system to detect position, speed, force, etc. and to provide feedback, thereby enabling precise operation.

The horizontal rail 20 is a device that provides the travel path of the robot arm 10. The horizontal rail 20 may be arranged beneath the robot arm 10. The horizontal rail 20 may include a rail (not shown) extending horizontally and a rail block (not shown) that slides along the rail.

The counter mass 30 is provided to maintain weight balance when the robot arm 10 moves. The counter mass 30 is disposed on the same horizontal line as the robot arm 10, but can move in the opposite direction to the moving direction of the robot arm 10. The counter mass 30 may be mounted on the horizontal rail 20. The counter mass 30 may be mounted on the horizontal rail 20 to slide along it, and may be connected to the screw rod (not shown) to receive driving force for movement in the opposite direction to the robot arm 10. In this case, the screw rod (not shown) may be provided with a left-hand thread and a right-hand thread on opposite sides with respect to the center.

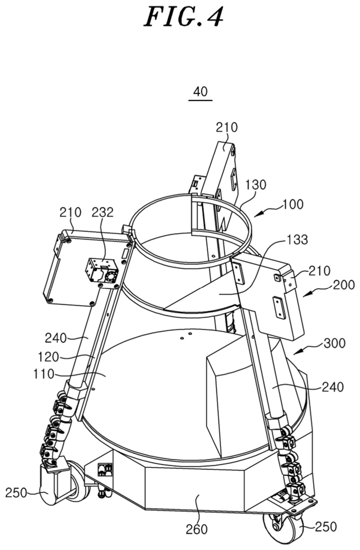

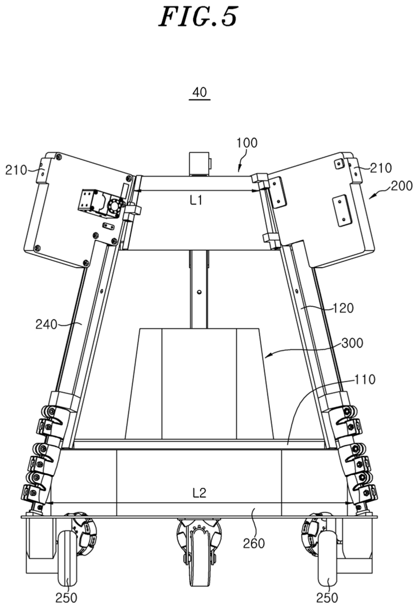

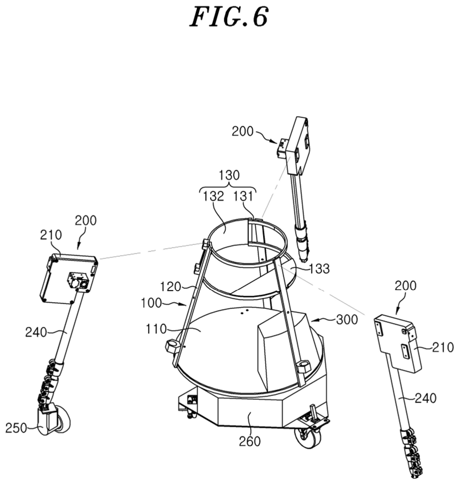

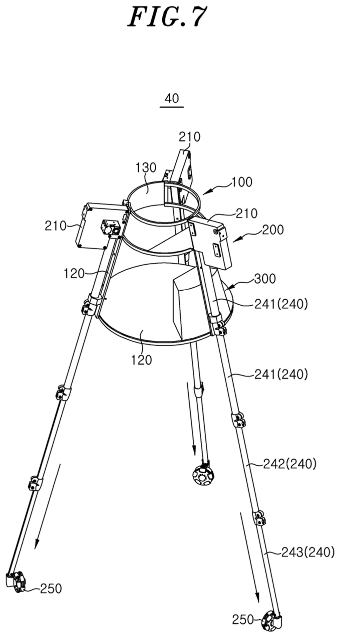

Referring to FIGS. 4 to 9, the aerial work platform 40 may be provided to support the horizontal rail 20 on its upper side and to move the robot arm 10 in one direction or raise the robot arm 10 to a predetermined height. The aerial work platform 40 includes a work main body unit 100, a multi-stage linear operating unit 200, a controller 300, and a counterbalance 260.

The work main body unit 100 may provide a space where a worker can work. The work main body unit 100 may be disposed at an upper portion of the aerial work platform 40. The multi-stage linear operating unit 200, which will be described later, may be connected to the outside of the work main body unit 100 to raise and lower it. The work main body unit 100 includes a main footboard 110, a support 120, and a safety railing 130.

The main footboard 110 may provide a floor surface on which a worker can stand. The main footboard 110 may be disposed at a lower end portion of the work main body unit 100. For example, the main footboard 110 may be provided in the form of a circular plate. The main footboard 110 may have a planar area larger than that of the safety railing 130, which will be described later.

The support 120 may connect the safety railing 130 and the main footboard 110. The support 120 may extend from the main footboard 110 to the outer side of the safety railing 130 and may be provided in plurality. The support 120 may be provided in the form of a plate bar. The support 120 may include a bolt hole (not shown) or a fixing ring (not shown) to which the multi-stage linear operating unit 200 can be connected.

The safety railing 130 may be provided to block the outer perimeter of the worker and prevent him/her from falling. The safety railing 130 is connected to the upper part of the support 120 and may be spaced apart from the main footboard 110 by a preset height. The safety railing 130 includes a railing member 131, a railing door 132, and a railing seat 133.

The railing member 131 accommodates a worker inside. The railing member 131 may be disposed at an upper portion of the safety railing 130. The railing member 131 may be open at the top and bottom so that a worker can be positioned inside. The railing member 131 may extend to surround a worker when the worker is standing on the main footboard 110. The railing member 131 may include an upper member and a lower member. For example, the railing member 131 may be provided such that the upper member and the lower member are respectively positioned at heights corresponding to the chest and waist of the worker. The railing member 131 may be provided in a plurality of ring shapes.

The railing door 132 opens and closes one side of the railing member 131. The railing door 132 may rotate to open and close one side of the railing member 131 to allow a worker to enter and exit the inside of the railing member 131. The railing door 132 may include a door body (not shown) in which one side of the railing member 131 is cut, and a door hinge (not shown) through which the door body is pivotably connected to the railing member 131.

The railing seat 133 is provided so that a worker can sit thereon while working. The railing seat 133 may be disposed on the inner side of the railing member 131. The railing seat 133 may have a plate shape, and in a specific example, may be provided in the form of a semicircle plate, but the present disclosure is not limited thereto. The railing seat 133 may be supported at the lower inner side of the railing member 131.

The multi-stage linear operating unit 200 can raise and lower the work main body unit 100 to a predetermined height. A plurality of multi-stage linear operating units 200 may be arranged on the outer side of the work main body unit 100. Each of the multi-stage linear operating unit 200 includes an operation main body 210, a block chain 220, a chain drive unit 230, a telescopic leg 240, and a moving wheel 250. The plurality of multi-stage linear operating units 200 may be arranged such that the spacing between the lower portions of the plurality of multi-stage linear operating units 200 is wider than the spacing between the upper portions thereof. In other words, the plurality of multi-stage linear operating units 200 are arranged such that the spacing therebetween increases as it goes downward.

The operation main body 210 may be provided to accommodate the block chain 220 and support the telescopic leg 240. The operation main body 210 may be positioned at the upper end of the multi-stage linear operating unit 200. The operation main body 210 may be connected to the upper end portion of the support 120. The operation main body 210 includes a case 211, a chain receiving portion 212, and a chain discharge path 213.

The case 211 accommodates the block chain 220 and allows it to be inserted and withdrawn in one direction. The case 211 may be attached to one side of the work main body unit 100. The case 211 may form the outer shape of the operation main body 210. A cover (not shown) for closing or opening the interior of the case 211 may be provided on one side of the case 211.

The chain receiving portion 212 accommodates the block chain 220. The chain receiving portion 212 may be provided inside the case 211. The chain receiving portion 212 may be formed with a predetermined depth and area. Each corner of the chain receiving portion 212 may be rounded so that the block chain 220 can be wound inside the chain receiving portion 212 when it moves. A fixing shaft (not shown) to which an end of the block chain 220 is fixed may be provided inside the chain receiving portion 212.

The chain discharge path 213 provides a passage for discharging the block chain 220 accommodated in the chain receiving portion 212 to the outside or introducing it into the inside. The chain discharge path 213 may extend from the chain receiving portion 212 to the outer surface of the case 211. The chain discharge path 213 may have an internal cross-sectional area equal to or larger than the cross-sectional area of the block chain 220.

The block chain 220 may be provided to transmit the driving force required for the extension and retraction of the telescopic leg 240. The block chain 220 may be formed of a plurality of blocks connected to rotate in one direction. On one side of the block chain 220, grooves (not shown) may be provided to receive the teeth of a drive sprocket 231, which will be described later. The block chain 220 may be configured to rotate in one direction and not in the opposite direction.

The chain drive unit 230 can provide driving force to move the block chain 220. The chain drive unit 230 can generate driving force required for the movement of the block chain 220. The chain drive unit 230 includes a driving sprocket 231 and a chain motor 232.

The drive sprocket 231 can engage with one side of the block chain 220 to transmit rotational force. The drive sprocket 231 may be provided in a gear shape in which a plurality of teeth protrude radially. The drive sprocket 231 may be positioned on one side of the chain discharge path 213. The drive sprocket 231 may be connected to a motor shaft of the chain motor 232 and rotated thereby.

The chain motor 232 rotates the drive sprocket 231. The chain motor 232 may be disposed outside the case 211. The chain motor 232 may penetrate the case 211 and be connected to the drive sprocket 231. The chain motor 232 may be provided as a step motor.

The telescopic leg 240 can be extended and retracted in length. The telescopic leg 240 may be disposed at the lower end of the operation main body 210. The telescopic leg 240 can be extended in the downward direction of the operation main body 210 when extended. The telescopic leg 240 includes a plurality of extension members, and the plurality of extension members 241, 242, 243, and 244 can slide relative to each other. For example, the extension members 241, 242, 243, and 244 may be provided in the form of a plurality of pipes with different diameters. The telescopic leg 240 may be configured such that its length is extended as the block chain 220 is discharged from the operation main body 210, and retracted as the block chain 220 is drawn back into the operation main body 210. The telescopic leg 240 may be arranged on the operation main body 210 to be inclined at an angle of 10° to 45° with respect to a vertical reference line. The plurality of extension members 241, 242, 243, and 244 include a first extension member 241, intermediate extension members (i.e., a second extension member 242 and a third extension member 243), and a fourth extension member 244.

The first extension member 241 is connected to one side of the operation main body 210. The first extension member 241 may be in communication with the chain discharge path 213 so that the block chain 220 accommodated inside the operation main body 210 is first inserted into it. The first extension member 241 may be formed with the largest diameter and inner diameter to constitute the outermost surface of the telescopic leg 240. The first extension member 241 is connected to the second extension member 242, which is the intermediate extension member inserted inside, and may be provided with a stop shoulder (not shown) having a reduced inner diameter on the inside so that the second extension member 242 can be stopped at a predetermined position.

The intermediate extension member is inserted into the interior of the first extension member 241. The intermediate extension member has an outer diameter smaller than the inner diameter of the first extension member 241. Multiple intermediate extension members may be provided. The intermediate extension member may include a stop shoulder (not shown) with a reduced inner diameter on the inside so that the fourth extension member 244 inserted inside can be stopped at a predetermined position.

The fourth extension member 244 may be connected to the block chain 220 to provide driving force for extension and retraction. The fourth extension member 244 may be positioned at the innermost part of the telescopic leg 240. The moving wheel 250 may be connected to the lower end of the fourth extension member 244. The block chain 220 may be connected to one end of the fourth extension member 244 without being inserted into the fourth extension member 244.

The moving wheel 250 moves the multi-stage linear operating unit 200 in one direction. The moving wheel 250 can rotate the work main body unit 100 in one direction. For example, the moving wheel 250 may be provided as a manual wheel, an electric wheel, a caster (swivel wheel), a general wheel, a special wheel (omnidirectional wheel), a two-degree-of-freedom wheel, etc.

The counterbalance 260 may be provided to maintain balance according to the weight of the worker. The counterbalance 260 may be disposed at any one of the plurality of multi-stage linear operating units 200. The counterbalance 260 may be provided with a plurality of wheels (not shown) at the bottom. The counterbalance 260 may be disposed at the lower end of the multi-stage linear operating unit 200. The counterbalance 260 may be positioned to be offset from one direction of the work main body unit 100 toward the opposite direction.

The controller 300 can control the operation of the motors and actuators of the robot arm 10. The controller 300 can control the chain motor 232 so that the extension height of the multi-stage linear operating unit 200 can be varied. The controller 300 can also control a motor (not shown) provided on the moving wheel 250 to drive the moving wheel 250.

The controller 300 may be implemented by a computing device including a microprocessor, and the implementation method is obvious to those skilled in the art, so further detailed description thereof will be omitted.

Hereinafter, with reference to the drawings, the operation and effects of the aerial work platform having the above-described configuration and the aerial work robot including the same will be described.

Referring to FIGS. 1 to 3, in the aerial work robot 1 according to one embodiment of the present disclosure, the robot arm 10 is provided on the upper part of the aerial work platform 40 whose height is variable, thereby allowing the robot arm 10 to move up and down to a predetermined height and enabling aerial work to be performed more easily.

In this case, by providing the horizontal rail 20 along which the robot arm 10 slides horizontally beneath the robot arm 10, the robot arm 10 can be moved in one direction, thereby expanding the working range for aerial work.

In addition, by providing the counter mass 30 that moves in the opposite direction when the robot arm 10 moves on the horizontal rail 20, when the robot arm 10 moves in one direction, the counter mass 30 moves in the opposite direction, thereby maintaining the overall weight balance of the aerial work robot 1.

Referring to FIGS. 4 to 7, the multi-stage linear operating units 200 configured to be extendable to raise and lower the work main body unit 100 to a predetermined height are arranged so that the lower spacing L2 is wider than the upper spacing L1. As a result, even when the height increases, the ground-supporting spacing increases, thereby preventing the aerial work platform 40 from overturning in advance.

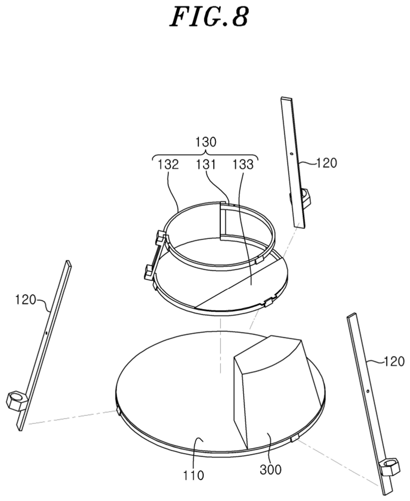

Referring to FIG. 8, the work main body unit 100 supports the safety railing 130 provided at a preset height through the plurality of supports 120 extending from the main footboard 110. In this case, by making the planar area of the main footboard 110 larger than that of the safety railing 130, the plurality of multi-stage linear operating parts 200 can be mounted at a predetermined inclination angle.

Meanwhile, by providing the railing door 132 that opens and closes on one side of the railing member 131 in the safety railing 130, a worker can easily enter and exit the inside of the railing member 131. In addition, by providing the railing seat 133 on the inner side of the railing member 131, the worker can take a rest during work or perform work while sitting thereon, which increases work efficiency.

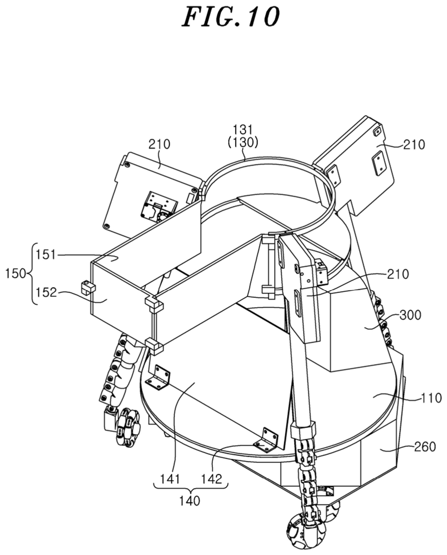

Hereinafter, another embodiment of the present disclosure will be described with reference to FIG. 10. In describing the another embodiment, the focus will be on differences compared to the aforementioned embodiment, and descriptions of components or functions that are the same will refer to the content already described in the aforementioned embodiment. The aerial work platform according to another embodiment of the present disclosure may be provided with an extension footboard 140 and an extension railing 150.

Referring to FIG. 10, the extension footboard 140 can expand the working space of the main footboard 110 on which a worker can stand. The extension footboard 140 may extend in the horizontal direction of the main footboard 110. The extension footboard 140 may be configured to rotate about a rotation center on the main footboard 110. The extension footboard 140 may be supported on the main footboard 110. The extension footboard 140 can be placed in a non-extended state or an extended state by being rotated in one direction. In the non-extended state, the extension footboard 140 is disposed in an orientation different from that of the main footboard 110 and positioned inside the main footboard 110 when viewed from above. In the extended state, the extension footboard 140 is oriented parallel to the main footboard 110 to extend outward from the main footboard 110 when viewed from above, that is, the extension footboard 140 is aligned horizontally with the main footboard 110 to protrude outward from the main footboard 110 when viewed from above. The extension footboard 140 includes an extension plate 141 and an extension hinge 142.

The extension plate 141 expands the space of the main footboard 110. The extension plate 141 may be placed on the upper portion of the main footboard 110, but the present disclosure is not limited thereto. The extension plate 141 may be formed as a flat plate. The extension plate 141 may be provided to unfold in the direction opposite to the counterbalance 260.

The extension hinge 142 connects the extension plate 141 and the main footboard 110 and may be provided to allow the extension plate 141 to be unfolded or folded in one direction. A portion of the extension hinge 142 is connected to the extension plate 141, and the other portion is connected to the main footboard 110.

The extension railing 150 extends from the safety railing 130 to expand the working space where a worker can work safely. The extension railing 150 may extend horizontally from the safety railing 130. The extension railing 150 can be positioned in the direction opposite to the counterbalance 260. The extension railing 150 includes an extension side wall 151 and an extension door 152.

The extension side wall 151 protrudes horizontally from the railing member 131. A plurality of extension side walls 151 may extend in parallel on both sides. The extension side wall 151 may be provided in the form of a vertically erected plate.

The extension door 152 may be disposed between the ends of the extension side walls 151. The extension door 152 may be selectively rotated to open and close for worker's entry and exit. The extension door 152 may be provided with a hinge to be rotatably connected to the extension side wall 151.

Referring to FIG. 10, the extension footboard 140 is provided with the extension plate 141 that unfolds in one direction, and the extension railing 150 is provided with the extension side walls 151 protruding from one side of the railing member 131, thereby enabling a worker to move to a work position that cannot be reached from the safety railing 130. As a result, the workable range can be significantly expanded.

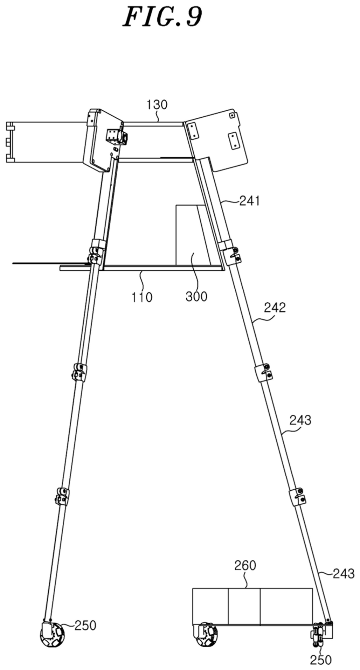

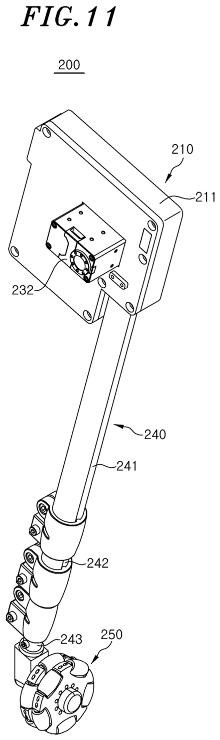

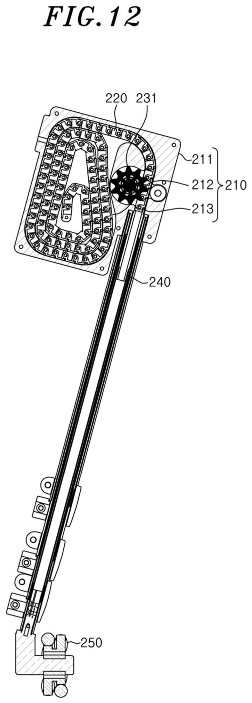

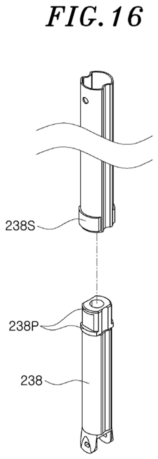

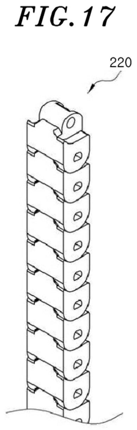

Hereinafter, referring to FIGS. 9 to 20, the multi-stage linear operating unit 200 will be described in more detail.

Referring to FIGS. 9 to 11, in the multi-stage linear operating unit 200, the block chain 220 discharged from or drawn into the interior of the operation main body 210 pushes or pulls the telescopic leg 240 of a telescope-like structure, thereby allowing the multi-stage linear operating unit 200 to be easily extended or retracted. In this case, when the plurality of multi-stage linear operating units 200 extend downward, specifically, when the length thereof is extended, the spacing between the lower ends of the plurality of multi-stage linear operating units 200 becomes wider, thereby enabling them to maintain greater stability while being elevated to a higher position.

Further, by providing the chain drive unit 230 including the drive sprocket 231 that is engaged with one side of the block chain 220 and rotated, and the chain motor 232 that rotates the drive sprocket, the block chain 220 can be moved in one direction.

Meanwhile, in the case 211 of the operation main body 210, by providing the chain receiving portion 212 in which the block chain 220 is accommodated and the chain discharge path 213 through which the block chain 220 is discharged to the outside, the block chain 220 can be wound in the chain receiving portion 212, thereby reducing the overall volume of the operation main body 210.

In addition, by providing the moving wheel 250 at the lower end of the telescopic leg 240 of the multi-stage linear operating unit 200, the work main body unit 100 can be moved in one direction or rotated in a predetermined direction.

Referring to FIG. 9, when a worker works on one side of the work main body unit 100, the multi-stage linear operating unit 200 is provided with the counterbalance 260 on the opposite side, thereby maintaining the overall weight balance of the aerial work platform 40 and preventing overturning and falling accidents in advance.

The multi-stage linear operating unit 200 may include an operation main body 210, telescopic legs 240, a block chain 220, and a drive sprocket 231.

The operation main body 210 may include a predetermined internal space.

The telescopic legs 240 may include a plurality of telescopic leg members 241, 242, 243, and 244 and be connected to the operation main body 210.

Specifically, the telescopic legs 240 may be arranged to overlap one another, and the outermost telescopic leg 241 is connected to the operation main body 210. Each telescopic leg may extend sequentially due to the supplied driving force, thereby increasing the overall length.

The block chain 220 may be wound inside the internal space of the operation main body 210 and connected at one end to the innermost telescopic leg among the plurality of telescopic legs 241, 242, 243, 244.

The drive sprocket 231 may be provided inside the internal space of the operation main body 210, preferably positioned to engage with the block chain 220.

Here, the internal space may refer to a space different from the space where the block chain 220 is housed. The drive sprocket 231 rotates and transmits rotational torque to the block chain 220, causing the block chain 220 to ascend or descend. Accordingly, some or all of the telescopic legs 240, which are connected at one end to the block chain 220, may move up or down.

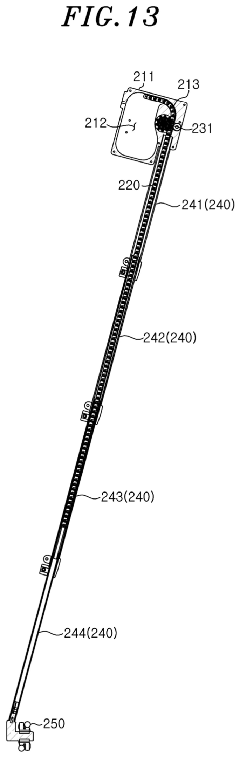

Specifically, assuming that the plurality of telescopic legs 241, 242, 243, and 244 include four components, and as shown in FIG. 13, assuming that the link farthest from the operation main body 210 is the fourth telescopic member 244, the drive sprocket 231 is rotated by a driving force supplied from the outside. As a result of this rotational force, the block chain 220, which is wound within the internal space of the operation main body 210, is unwound, thereby extending the second to fourth telescopic members 242, 243, and 244, and the overall length of the multi-stage linear linear operating unit 200 can be increased.

In other words, by controlling the rotation amount of the drive sprocket 231 through an external control means or a driving means provided in the multi-stage linear operating unit 200, the overall extension length of the multi-stage linear operating unit 200 can be adjusted. Additionally, by measuring the rotation amount of the drive sprocket 231, the total extended length, i.e., the height, of the multi-stage linear operating unit 200 can be easily determined.

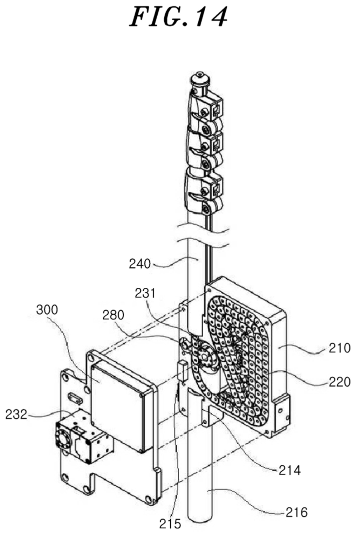

Referring again to FIG. 14, as illustrated in FIG. 14, the multi-stage linear operating unit 200 may further include a chain motor 232.

The motor 232 may be coupled to the operation main body 210 and share a shaft with the drive sprocket 231 to provide driving force to the drive sprocket 231, and specifically, the motor may include a brake.

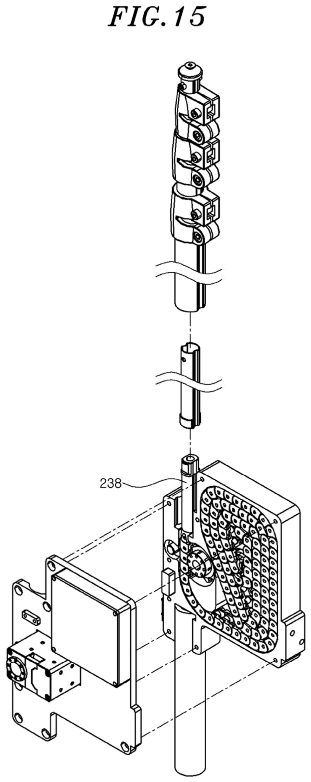

As shown in FIGS. 15 to 16, the multi-stage linear operating unit 200 may further include a fixing rod 238.

The fixing rod 238 may be inserted and coupled to one end of the fourth telescopic member 244, and although it may be fixed by a general screw, the present disclosure proposes a method including the following configuration.

Specifically, the fourth telescopic member 244 may include a hole (not shown) of a predetermined size formed at one end in the extension direction thereof.

In addition, The fixing rod 238 may include fixing projections 238P formed in directions facing each other at the other end thereof and at a position spaced a predetermined distance from the other end thereof.

Furthermore, the multi-stage linear operating unit 200 may further include a sliding block 238S having a protrusions that pass through the hole and engage with the fixing protrusions 238P.

In other words, at one end of the fourth telescopic member 244, a sliding block 238S may be inserted to facilitate sliding while reducing clearance with the third telescopic member 243. At this time, the protrusions formed on the inner surface of the sliding block 238S are caught by the fixing protrusions 238P formed at the other end of the fixing rod 238 and at a predetermined distance from the other end, preventing the sliding block 238S from falling downward and preventing further insertion into the fourth telescopic member 244.

First, the block chain 220 may be formed to bend easily in one direction and can be wound and stored inside the operation main body 210, as shown in FIG. 14, but does not bend easily in the opposite direction. Therefore, when driven by the drive sprocket 231, it can effectively push out the plurality of telescopic legs 240.

A conventional block chain has clearances even in the non-bending direction, allowing some play. However, the block chain 220 according to the present disclosure preferably has no clearance when straightened in the non-bending direction. Specifically, the block chain 220 may include a plurality of integrally formed blocks, and the clearance between blocks on the non-bending side is preferably smaller than that on the bending side. Thus, backlash errors caused by bending during contraction or extension can be minimized.

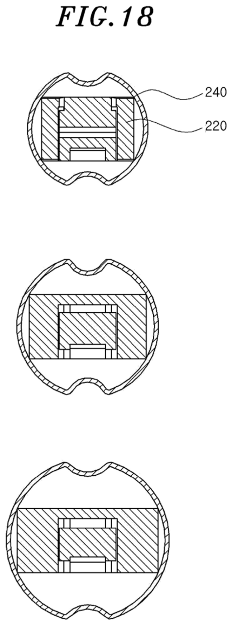

Also, as shown in FIG. 18, the block chain 220 according to the present disclosure preferably includes a uniform thickness on the bending side over its entire length, and a width corresponding to the thickness (i.e., diameter) of each telescopic leg 241, 242, 243, and 244 at the respective stages where the block chain 220 is positioned as it moves.

Here, since the plurality of telescopic legs 241, 242, 243, and 244 are configured to be inserted into one another for storage, it is natural that the diameter of the telescopic legs increases the closer they are positioned to the operation main body 210.

Accordingly, the block chain 220 can be prevented from bending inside the telescopic legs 240, and at the same time, the telescopic legs 240 can effectively resist external forces or bending applied from outside.

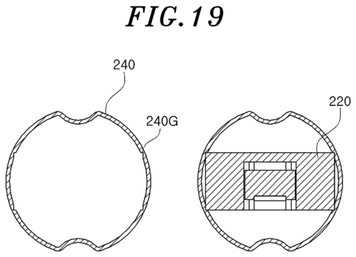

Further, as shown in FIG. 19, the plurality of telescopic legs 241, 242, 243, and 244 according to the present disclosuer may each include a guide groove 240G on the inner circumferential surface for the movement of the block chain 220.

Specifically, when the thickness of the telescopic leg 240 exceeds a predetermined threshold, the guide groove 240G may be formed on the inner circumferential surface of the telescopic leg 240 to reduce relative rotation caused by clearance between adjacent telescopic legs, thereby preventing jamming of the block chain 220 caused by relative rotation of the telescopic legs 240.

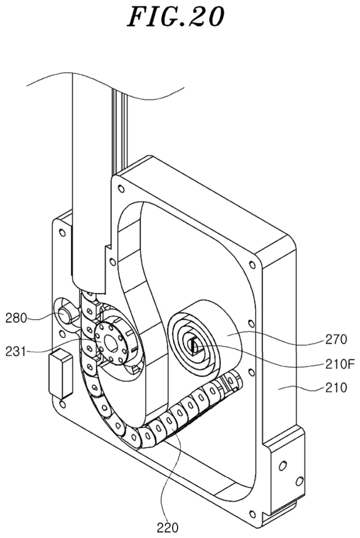

FIG. 20 is a schematic view showing the interior of a housing according to another embodiment different from FIG. 14 of the present invention.

As shown in FIG. 20, the operation main body 210 may further include a fixing part 210F, and the multi-stage linear operating unit 200 may further include a spiral spring 270.

The fixing part 210F may be provided in the internal space of the operation main body 210 where the block chain 220 is wound, preferably at the center. The spiral spring 270 may have one end fixed to the fixing part 210F and the other end fixed to the other end of the block chain 220.

Thus, as described above, since the block chain 220 bends easily in one direction but not in the opposite direction, when the plurality of telescopic legs 241, 242, 243, and 244 retract, the spiral spring 270 can serve as a guide to prevent the block chain 220 from not winding properly into the operation main body 210.

When the length of the multi-stage linear operation unit 200 increases, the number of blocks in the block chain 220 also increases. In cases where the block chain 220 does not wind properly even with the use of the spiral spring 270, a winding motor (not shown) may be fixed to the fixing unit 210F to wind or unwind the block chain 220 as needed.

Meanwhile, as shown in FIG. 20, the multi-stage linear operating unit 200 may further include a bearing 280. The bearing 280 may be provided in the internal space of the operation main body 210 and positioned in alignment with the drive sprocket 231, centered around the block chain 220. As a result, the bearing 280 closely engages the block chain 220 to stably support its movement without wobbling, thereby enabling smooth travel of the block chain 220.

Also, referring again to FIG. 14, according to another embodiment of the present disclosure, the multi-stage linear operating unit 200 may further include a handle fixing part 214.

The handle fixing part 214 may be formed on the operation main body 210. When the side where the telescopic legs 240 are provided is defined as one side, the handle fixing part 214 may be formed on the opposite side. Although not limited to this direction, forming the handle fixing part 214 on the opposite side to the telescopic legs 240 and sharing the same axis is preferable for better supporting the weight of the telescopic legs 240 and the block chain 220, thereby providing greater stability. Further, it is preferable that the handle fixing part 214 is formed to include a predetermined space inside the operation main body 210. Although it can be formed outside the operation main body 210, forming the predetermined space inside allows more stable coupling with other devices attached to the handle fixing part 214 and supports the weight more effectively.

Further, again referring to FIG. 14, according to another embodiment of the present disclosure, the multi-stage linear operating unit 200 may further include a handle 216. The handle 216 can be snap-fitted into the handle fixing part 214. The handle 216 may have a predetermined length, with part of its total length inserted and snap-fitted into the internal space of the handle fixing part 214.

Additionally, as shown in FIG. 14, a multi-stage linear operating system according to the present invention may include the multi-stage linear operating unit 200 described above and a controller 300.

The control unit 300 may be connected to the multi-stage linear operation unit 200 and configured to control the position of the telescopic legs 240 included in the multi-stage linear operation unit 200 in real time.

Further, a button part 215 may be provided on one surface of the handle fixing part 214. When the button part 215 is operated by a user, it can send commands to the controller 300 to drive the telescopic legs 240 up or down, thus controlling the position of the telescopic legs 240 in real time.

Specifically, the controller 300 is connected to the drive sprocket 231 of the multi-stage linear operating unit 200, and by controlling the rotation of the drive sprocket 231, the position of the telescopic legs 240 can be controlled in real time.

The examples of the present disclosure have been described above as specific embodiments, but these are only examples, and the present disclosure is not limited thereto, and should be construed as having the widest scope according to the technical spirit disclosed in the present specification. A person skilled in the art may combine/substitute the disclosed embodiments to implement a pattern of a shape that is not disclosed, but it also does not depart from the scope of the present disclosure. In addition, those skilled in the art can easily change or modify the disclosed embodiments based on the present specification, and it is clear that such changes or modifications also belong to the scope of the present disclosure.

## Claims

1. An aerial work platform comprising:
a work main body unit providing a working space for a worker;
a plurality of multi-stage linear operating units configured to extend to raise and lower the work main body unit to a predetermined height; and
a controller for controlling the operation of the plurality of multi-stage linear operating units,
wherein the plurality of multi-stage linear operating units are arranged such that a spacing therebetween increases as it goes downward, and
wherein when the plurality of multi-stage linear operating units are extended, the spacing between lower ends of the plurality of multi-stage linear operating units becomes wider.

2. The aerial work platform of claim 1, wherein the work main body unit includes:
a main footboard;
a plurality of supports extending from the main footboard; and
a safety railing connected to the supports to prevent the worker from falling, and
wherein the main footboard has a planar area larger than that of the safety railing.

3. The aerial work platform of claim 2, wherein the safety railing includes:
a railing member that is open at the top and bottom;
a railing door configured to rotate in one direction to open and close one side of the railing member; and
a railing seat disposed on the inner side of the railing member for the worker to sit on.

4. The aerial work platform of claim 2, wherein the work main body unit further includes an extension footboard that is rotatably connected to the main platform and expands the working space for the worker.

5. The aerial work platform of claim 4, wherein the extension footboard is configured to:
rotate to be placed in an extended state in which the extension footboard is aligned horizontally with the main footboard or in a non-extended state deviating from the extended state;
in the non-extended state, be disposed in an orientation different from that of the main footboard in the non-extended state and positioned inside the main footboard when viewed from above; and
in the extended state, protrude outward from the main footboard when viewed from above.

6. The aerial work platform of claim 3, wherein the work main body unit further includes an extension railing extending horizontally from the safety railing to expand the working space, and
the extension railing includes a plurality of extension side walls protruding horizontally from the railing member, and an extension door disposed between ends of the plurality of extension side walls and configured to be selectively opened and closed.

7. The aerial work platform of claim 1, wherein each of the multi-stage linear operating units includes:
an operation main body having a predetermined internal space;
a plurality of telescopic legs connected to the operation main body;
a block chain wound inside the internal space of the operation main body, one end of which is connected to one end of the innermost telescopic leg among the plurality of telescopic legs; and
a drive sprocket provided inside the internal space of the operation main body at a position engaged with the block chain to transmit rotational force to the block chain,
wherein the drive sprocket controls the movement of the block chain wound inside the internal space of the operation main body by driving power supplied from an external source.

8. The aerial work platform of claim 7, wherein the block chain comprises a plurality of integrally formed blocks, and
wherein a clearance between blocks on the non-bending side of the block chain is smaller than a clearance between blocks on the bending side, such that when the block chain is straightened, the smaller clearance is equal to or less than a predetermined thereshod to maintaine a straight shape.

9. The aerial work platform of claim 7, wherein the plurality of telescopic legs have diameters that increase closer to the operation main body, and
wherein the block chain has a uniform thickness over an entire length thereof, and includes a width corresponding to the diameter of each of the plurality of telescopic legs where the block chain is positioned.

10. The aerial work platform of claim 9, wherein each of the plurality of telescopic legs further includes a guide groove formed on the inner circumferential surface thereof to guide the movement of the block chain.

11. The aerial work platform of claim 7, further comprising:
a bearing provided inside the operation main body and disposed at a position corresponding to the drive sprocket around the block chain,

12. The aerial work platform of claim 7, further comprising:
a fixing part provided at a center of an internal space of the operation main body where the block chain is accommodated; and
a spiral spring having one end fixed to the fixing part and the other end fixed to the other end of the block chain.

13. The aerial work platform of claim 7, further comprising:
a shaft provided at a center of an internal space of the operation main body where the block chain is accommodated; and
a winding motor that generates rotational force to wind or unwind the block chain, a rotation shaft of the winding motor being fixed to the shaft and the body of the motor being fixed to the operation main body.

14. The aerial work platform of claim 7, further comprising:
a fixing rod inserted into and coupled to one end of the innermost telescopic leg,
wherein the innermost telescopic leg includes a predetermined hole formed at one end thereof,
wherein the fixing rod includes fixing protrusions formed in opposing directions at the other end thereof and at a predetermined position from the other end thereof, and
wherein the multi-stage linear operating unit further includes a sliding block having an inner protrusion that is inserted and engaged with the hole and the fixing protrusions.

15. The aerial work platform of claim 1, further comprising a counterbalance disposed at any one of the plurality of multi-stage linear operating units such that when work is performed at a position on one side of the work main body unit, the counterbalance is positioned to be offset in a direction opposite to the working position to maintain weight balance.
